# EUROPÄISCHE PATENTANMELDUNG

(11) **EP 1 739 526 A1**
(43) Veröffentlichungstag der Anmeldung: **03.01.2007**
(21) Anmeldenummer: 05014338.7
(22) Anmeldetag: 01.07.2005
(51) Int. Cl.: G06F 3/023

(54) **Elektrisch betriebene Anzeige- und Bedienvorrichtung**

(71) Anmelder: Festo AG & Co., 73734 Esslingen (DE)
(72) Erfinder: Giousouf, Metin, 73732 Esslingen (DE); Nestle, Volker, 73734 Esslingen (DE)
(74) Vertreter: Abel, Martin

(57) **Zusammenfassung**

Es wird eine elektrisch betriebene Anzeige- und Bedienvorrichtung (1) vorgeschlagen, die über mindestens ein Flachgestalt aufweisendes Anzeigeelement (4) verfügt und mit einer mindestens eine Bedientaste (5) aufweisenden Bedientastatur (6) ausgestattet ist. Das Anzeigeelement ist von einem elektronischen Papier oder einer Elektrolumineszenzfolie gebildet. Gemeinsam mit der Bedientastatur (5) ist es zu einer platten- oder folienförmigen biegeflexiblen Anzeige- und Bedieneinheit (2) zusammengefasst, deren Vorderseite (7) eine kombinierte Anzeige- und Bedienseite bildet. Auf diese Weise können Bedienungs- und Anzeigefunktionen sehr platzsparend in einer Baueinheit vereinigt werden.

## Beschreibung

Die Erfindung betrifft eine elektrisch betriebene Anzeige- und Bedienvorrichtung, mit mindestens einem als elektronisches Papier oder als Elektrolumineszenzfolie ausgebildeten, Flachgestalt aufweisenden Anzeigeelement und mit einer mindestens eine Bedientaste für manuelle Bedienung aufweisenden Bedientastatur.

In der DE 103 45 197 A1 ist eine derartige Anzeige- und Bedienvorrichtung in Verbindung mit einem Haushaltsgerät beschrieben. Die Vorrichtung enthält ein zur Wiedergabe von Benutzerinformationen und/oder zur Umfeldbeleuchtung dienendes Anzeigeelement, das in Form einer sogenannten Elektrolumineszenzfolie gestaltet ist, insbesondere auf der Basis organischer Lichtabgabedioden (O-LED), welche auch als Polymer-O-LEDs bezeichnet werden. Das Anzeigeelement sitzt an einem dafür geeigneten Träger, der am jeweiligen Haushaltsgerät befestigt wird oder unmittelbar von dem Haushaltsgerät gebildet sein kann. Die Befestigung am jeweiligen Träger kann auf unterschiedliche Art erfolgen, beispielsweise durch Ankleben und insbesondere auch in lösbarer Weise. Eine ebenfalls vorgesehene geräteseitige Bedientastatur dient zur Bedienung des Haushaltsgerätes, wobei das Anzeigeelement mit Durchbrüchen versehen sein kann, die eine dahingehende Montage ermöglichen, dass die geräteseitigen Bedientasten durch die Elektrolumineszenzfolie hindurch zugänglich sind.

In der DE 103 45 197 A1 wird neben Elektrolumineszenzfolien auch sogenanntes elektronisches Papier zur Verwendung als Anzeigevorrichtung eines Haushaltsgerätes beschrieben. Solches elektronisches Papier hat den Vorteil eines besonders geringen Stromverbrauches, weil es keine aktiven Lichtabgabemittel beinhaltet. Das Ablesen der angezeigten Informationen erfordert daher regelmäßig eine helle Umgebung oder zusätzliche Beleuchtung.

Gegenüber LCD- oder LED-Anzeigevorrichtungen haben Elektrolumineszenzfolien oder elektronisches Papier den Vorteil einer flächenhaften, relativ dünnen Gestalt, was eine platzsparende Unterbringung am Einsatzort ermöglicht. Aufgrund der notwendigen elektrischen Verknüpfung mit einer Bedientastatur ist der insgesamt für die Realisierung einer Anzeige- und Bedienvorrichtung anzusetzende Installationsaufwand aber noch immer relativ umfangreich.

Auch auf dem Sektor der Fluidtechnik, insbesondere der Pneumatik, kommen vielfach Gerätschaften zum Einsatz, die mit einer Bedienvorrichtung und zugeordneter Anzeigevorrichtung ausgestattet sind. So beschreibt beispielsweise das deutsche Gebrauchsmuster 20 2004 005 748 eine auf dem Gebiet der Automatisierungstechnik in Verbindung mit fluidtechnischen Komponenten einsetzbare Bedienvorrichtung mit einem Gehäuse, das ein Display aufweist und gesondert davon mit Bedientasten als Eingabemittel ausgestattet ist. Die Installation der für die Anzeige und Bedienung erforderlichen Komponenten ist auch hier recht umständlich. Zudem nehmen diese Komponenten relativ viel Einbauraum in Anspruch.

Es ist die Aufgabe der vorliegenden Erfindung, eine Anzeige- und Bedienvorrichtung zu schaffen, die sich einfach installieren lässt und wenig Einbauraum in Anspruch nimmt.

Zur Lösung dieser Aufgabe sind das mindestens eine Anzeigeelement und die Bedientastatur zu einer platten- oder folienförmigen biegeflexiblen Anzeige- und Bedieneinheit zusammengefasst, deren Vorderseite eine kombinierte Anzeige- und Bedienseite bildet.

Somit werden Anzeigeelement und Bedientastatur zu einer äußerst flach bauenden Baueinheit in Gestalt der Anzeige- und Bedieneinheit zusammengefasst. Durch diese Zusammenfassung in einem Bauteil gestaltet sich die Installation am Einsatzort sehr einfach, und es erübrigt sich der gesonderte Einbau einer vom Anzeigeelement unabhängigen Bedientastatur. Die insgesamt biegeflexiblen Eigenschaften gestatten eine Anpassung an nicht ebene und beispielsweise gewölbte Montageflächen. Die rechtwinkelig zur Ausdehnungsebene der Anzeige- und Bedieneinheit relativ geringe Bauhöhe gestattet es, die Anzeige- und Bedienvorrichtung insgesamt mit äußerst kompakten Abmessungen zu realisieren.

Vorteilhafte Weiterbildungen der Erfindung gehen aus den Unteransprüchen hervor.

Ist die Anzeige- und Bedieneinheit rückseitig mit Haftmitteln versehen, ist eine sehr einfache Befestigung an einer beliebigen Tragstruktur möglich. Denkbar sind beispielsweise Haken-und-Schlingen-Verbindungsmittel, oft als "Klettenverschlussmittel" bezeichnet, die auf einfache Weise eine lösbare Befestigung ermöglichen. Insbesondere wenn eine lösbare Fixierung nicht oder nur von untergeordneter Bedeutung ist, bietet sich die Realisierung der Haftmittel als Klebeschicht an, und zwar vorzugsweise in Gestalt einer Selbstklebeschicht, die mit einer Schutzfolie versehen sein kann, die man unmittelbar vor dem Aufkleben auf einer Tragstruktur entfernt.

Es versteht sich, dass die Anzeige- und Bedieneinheit auch durch gesonderte Applikation von Klebemitteln an Ort und Stelle befestigt werden kann, beispielsweise durch Bestreichen der Rückseite der Anzeige- und Bedieneinheit und/oder des damit zu verbindenden Gegenstückes mit einem geeigneten Klebstoff.

Die Anzeige- und Bedienvorrichtung besitzt zweckmäßigerweise eine von der Anzeige- und Bedieneinheit abgehende biegeflexible Kabelverbindung, insbesondere in Gestalt einer flexiblen Leiterplatte. Über sie kann die Verbindung zu einer Steuerelektronik erfolgen, die die eingegebenen Tastaturbefehle verarbeitet und notwendige Informationen über das Anzeigeelement zur Anzeige bringt. Über die Kabelverbindung ist insbesondere eine lösbare Verbindung zu einer Steuerelektronik realisierbar.

Die Anzeige- und Bedienvorrichtung kann eine geeignete, insbesondere formstabile Tragstruktur aufweisen, an der die Anzeige- und Bedieneinheit so fixiert ist, dass ihre als Anzeige- und Bedienseite fungierende Vorderseite für Bedien- und Ablesezwecke zugänglich ist. Die Tragstruktur kann beispielsweise zumindest partiell nach Art eines Gehäuses ausgebildet sein, so dass beispielsweise die Möglichkeit besteht, darin in unmittelbarer Nachbarschaft der Anzeige- und Bedieneinheit eine eventuell erforderliche Steuerelektronik unterzubringen. Die Steuerelektronik ist zweckmäßigerweise unabhängig von der Anzeige- und Bedieneinheit an der Tragstruktur fixiert, was für eine einfache Montage sorgt.

In einer bevorzugten Ausgestaltung repräsentiert die Anzeige- und Bedienvorrichtung insgesamt unmittelbar ein zur Erfassung mindestens einer Zustandsgröße dienendes Sensorgerät. In diesem Falle ist eine mit den notwendigen Sensormitteln ausgestattete Sensoreinrichtung vorhanden, die ein Gehäuse oder eine sonstige Komponente aufweist, welche eine Tragstruktur für die eine flächenhafte Ausdehnung aufweisende Anzeige- und Bedieneinheit bildet. Die Sensormittel umfassen der Auswertung dienende Elektronikkomponenten, die mit der Anzeige- und Bedieneinheit in elektrischer Wirkverbindung stehen, so dass zum einen für den Messvorgang relevante manuelle Eingaben möglich sind, wie auch eine visuelle Ausgabe der sensorisch ermittelten und eventuell aufbereiteten Daten wie auch sonstiger relevanter Betriebsdaten.

Bei der mit der Anzeige- und Bedieneinheit zu einer Anzeige- und Bedienvorrichtung kombinierten Sensoreinrichtung kann es sich beispielsweise um eine Drucksensoreinrichtung oder um eine Durchflusssensoreinrichtung handeln, mit der Druck- und/oder Durchflussdaten eines beispielsweise durch einen Kanal hindurchströmenden Fluides erfasst werden können.

Bei einer möglichen Realisierungsform der Anzeige- und Bedieneinheit liegen die Bedientastatur und das mindestens eine Anzeigeelement in einer gemeinsamen Ebene nebeneinander und werden an der Vorderseite zweckmäßigerweise von einer gemeinsamen Abdeckfolie abgedeckt, die wenigstens im Anzeigebereich des Anzeigeelementes lichtdurchlässig ist. Durch die Abdeckfolie kann ein hoch wirksamer Schutz vor Verunreinigungen erzielt werden, der einen Einsatz auch in unwirtlicher Umgebung gestattet. Außerdem kann die Abdeckfolie zum Zusammenhalt von Bedientastatur und Anzeigeelement dienen.

In einer besonders vorteilhaften Bauform wird die Bedientastatur von dem flächenhaften Anzeigeelement ohne Unterbrechung überdeckt. Die Bedientastatur liegt also unter dem Anzeigeelement, welches dabei keine Durchbrechungen für den Zugang zur Bedientastatur aufweist, so dass die Tastenbetätigung durch manuelle Beaufschlagung der die jeweils zu betätigende Bedientaste überdeckenden Zone des Anzeigeelementes vorgenommen wird. Auch hierdurch ergibt sich bevorzugt eine geschlossene Oberfläche an der Vorderseite der Anzeige- und Bedieneinheit, was einem Eindringen von Verschmutzung entgegenwirkt.

Die Bedientastatur kann in mindestens einer rückseitigen Ausnehmung des Anzeigeelementes platziert sein, in die sie teilweise oder vorzugsweise zur Gänze eintaucht.

Sofern die Bedientastatur rückseitig ein Stück weit aus dem Anzeigeelement herausragt oder vollständig außerhalb des Anzeigeelementes an dessen Rückseite platziert ist, empfiehlt es sich, zur Überbrückung der über das Anzeigeelement vorstehenden Bauhöhe der Bedientastatur eine mit dieser in einer gemeinsamen Ebene liegende Ausgleichsschicht vorzusehen, um eine möglichst bündige rückseitige Oberfläche der Anzeige- und Bedieneinheit zu erhalten. Auf diese Weise kann die Anzeige- und Bedieneinheit bei der Montage mit ihrer Rückseite großflächig auf einer Unterlage, beispielsweise einer zugeordneten Tragstruktur aufgelegt werden.

Das Anzeigeelement kann zusätzlich zu der die anzuzeigenden Werte wiedergebenden mindestens einen Informations-Anzeigezone zusätzlich mindestens eine Bedienungs-Anzeigezone aufweisen, die mindestens einer Bedientaste der Bedientastatur funktionell spezifisch zuordnet ist. Die Bedienungs-Anzeigezone kann beispielsweise die Tastenfunktion der zugeordneten Bedientaste wiedergeben, so dass selbige keiner eigenen, statischen Beschriftung bedarf. Auf diese Weise ist insbesondere auch eine variable "Beschriftung" der einzelnen Bedientasten durch entsprechende elektrische Ansteuerung des Anzeigeelementes möglich. Zweckmäßig ist in diesem Zusammenhang auch eine dynamische Tastenbelegung mit entsprechenden Bedieninformationen, so dass von Fall zu Fall jeweils auf den momentanen Betriebszustand spezifisch zugeschnittene Bedieninformationen für eine oder mehrere Bedientasten erscheinen. In all diesen Fällen übernimmt das Anzeigeelement folglich eine Mehrfachfunktion, so dass es zusätzlich zu Betriebsdaten oder sonstigen allgemeinen Informationen, die in mindestens einer Informations-Anzeigezone wiedergegeben werden, gleichzeitig auch die Tastenbeschriftung für die Bedientastatur in mindestens einer dafür vorgesehenen gesonderten Zone anzeigen kann.

Man kann nicht nur eine Schwarz-Weiß-Wiedergabe oder monochrome Wiedergabe verwirklichen, sondern auch eine mehrfarbige Anzeige, wobei dann Schriften oder Symbole sowohl statisch oder auch blinkend dargestellt werden können.

Die Verwendung eines elektronischen Papiers als Anzeigeelement hat den Vorteil, dass es nicht notwendig ist, das Display mit einer Hintergrundbeleuchtung zu versehen und dennoch auch unter ungünstigem Blickwinkel ein hoher Darstellungskontrast gewährleistet ist. Die Montage ist sehr einfach, wobei sich die Anzeige- und Bedieneinheit aufgrund ihrer Flexibilität hinsichtlich seiner Formgebung leicht an die örtlichen Gegebenheiten anpassen kann.

Nachfolgend wird die Erfindung anhand der beiliegenden Zeichnung näher erläutert. In dieser zeigen:
- Figur 1: die mit einem abgehenden flexiblen Kabel versehene Anzeige- und Bedieneinheit einer bevorzugten ersten Bauform der Anzeige- und Bedienvorrichtung in einer Draufsicht auf die kombinierte Anzeige- und Bedienseite,

- Figur 2: die Anordnung aus Figur 1 im Längsschnitt gemäß Schnittlinie II-II aus Figur 1,
- Figur 3: eine mit der Figur 2 vergleichbare Längsschnittdarstellung einer insbesondere hinsichtlich der Anordnung der Bedientastatur abweichend gestalteten Anzeige- und Bedieneinheit,
- Figur 4: eine weitere Ausführungsform der Anzeige- und Bedienvorrichtung, wobei eine auf einer Tragstruktur fixierte Anzeige- und Bedieneinheit ersichtlich ist,
- Figur 5: die Anordnung aus Figur 4 in einer Draufsicht auf die Anzeige- und Bedienseite,
- Figur 6: eine weitere Ausführungsform der Anzeige- und Bedieneinheit, die sich außer im Schichtaufbau auch noch dadurch von den Bauformen der Figuren 1 bis 5 unterscheidet, dass das Anzeigeelement im Gegensatz zu dem bei Figuren 1 bis 5 vorhandenen elektronischen Papier als Elektrolumineszenzfolie ausgebildet ist,
- Figur 7: eine mit der Anzeige- und Bedieneinheit gemäß Figur 6 ausgestattete Anzeige- und Bedienvorrichtung, die über eine Sensoreinrichtung verfügt, im Längsschnitt, und
- Figur 8: eine mögliche Realisierungsform einer Anordnung von Bedienungs-Anzeigezonen in gesonderter Darstellung.

Die in der Zeichnung insgesamt mit Bezugsziffer 1 versehenen unterschiedlichen Bauformen der erfindungsgemäßen Anzeige- und Bedienvorrichtung verfügen jeweils als Kernkomponente über eine platten- oder folienartige Anzeige- und Bedieneinheit 2, die insgesamt derart biegeflexibel und insbesondere biegeelastisch ausgebildet ist, dass sie quer zu ihrer strichpunktiert angedeuteten Hauptausdehnungsebene 3, bevorzugt elastisch, verformbar ist.

In der Anzeige- und Bedieneinheit ist unter anderem jeweils mindestens ein flächenhaftes, relativ dünnes Anzeigeelement 4 und eine mit einer oder mehreren Bedientasten 5 versehene Bedientastatur 6 zu einer kartenförmigen flachen Baueinheit zusammengefasst. Dabei ist die Anordnung so getroffen, dass eine der beiden großflächigen Karten- bzw. Plattenseiten, die im folgenden als Vorderseite 7 bezeichnet sei, als kombinierte Anzeige- und Bedienseite fungiert, man dort also sowohl die Bedientastatur betätigen als auch die angezeigten Informationen ablesen kann.

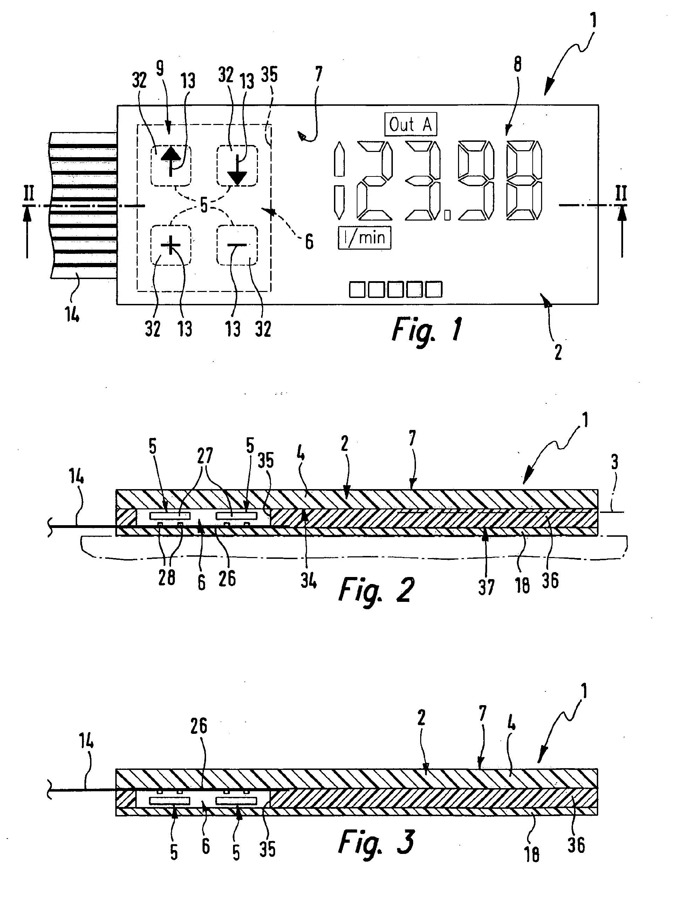

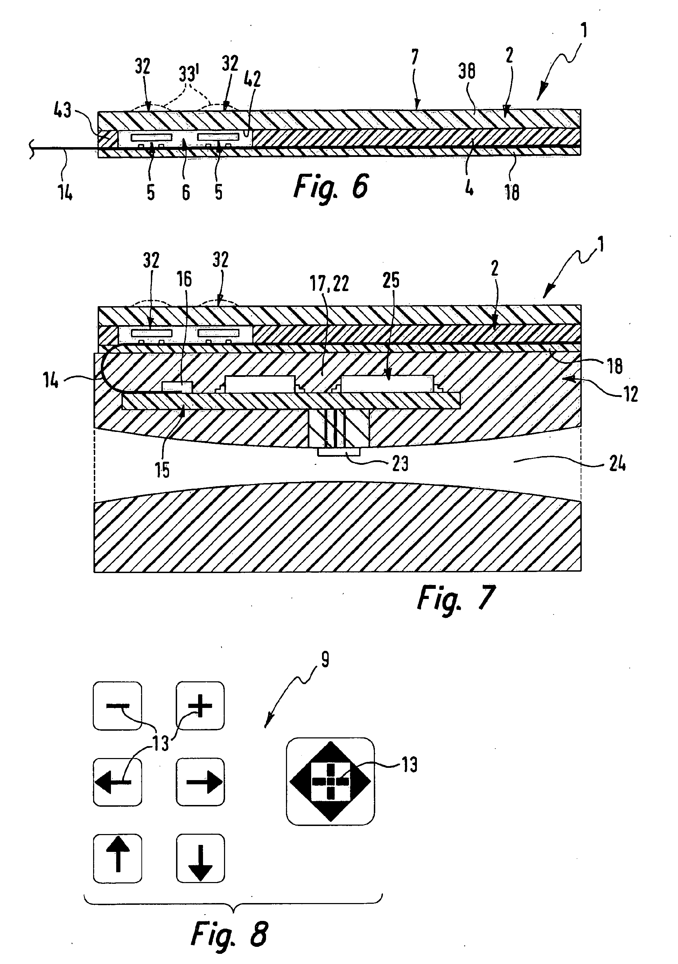

Bei dem Flachgestalt aufweisenden, flächenhafte Ausdehnung besitzenden Anzeigeelement 4 handelt es sich entweder um sogenanntes elektronisches Papier oder um eine sogenannte Elektrolumineszenzfolie. Exemplarisch zeigen die Figuren 1 bis 5 auf elektronischem Papier aufgebaute Bauformen, während die in Figuren 6 bis 8 gezeigte Ausführungsform eine Elektrolumineszenzfolie als Anzeigeelement 4 aufweist. Es können jedoch beliebig sämtliche Ausführungsformen mit der einen und/oder anderen Art von Anzeigeelement realisiert werden.

Bei elektronischem Papier, häufig auch als "e-paper" bezeichnet, handelt es sich um eine in der Regel folienähnliche Grundlage mit einer gelegentlich auch als "e-Tinte" bezeichneten Beschichtung. Die gesamte Fläche ist in elektrisch ansteuerbare Zonen unterteilt, so dass eine elektrische Spannung anlegbar ist, die auf der Beschichtung eine bestimmte Darstellung hervorruft, die durch Änderung der Ansteuerung auch verändert werden kann.

Elektrolumineszenzfolien bestehen aus einer Vielzahl von Anzeigepixeln in beliebiger Farbe, die durch Anlegen einer elektrischen Spannung in der Regel pixelweise ansteuerbar sind und dadurch zum Leuchten gebracht werden. Auf Elektrolumineszenzfolien basierende Anzeigeelemente werden häufig auch als organische LED-Displays (O-LED-Displays) oder als Polymer-LED-Displays (P-LED-Displays) bezeichnet.

Da Aufbau und Funktionsweise von elektronischem Papier und Elektrolumineszenzfolien als solches bekannt sind, wird an dieser Stelle auf die Erläuterung weiterer Einzelheiten verzichtet. In der DE 103 45 197 A1 finden sich technische Beschreibungen zu beiden Bauarten einschließlich Verweisen auf Literatur, die sich vertiefend mit derartigen Produkten befasst. Die dortigen Ausführungen werden hiermit zum Gegenstand der vorliegenden Beschreibung gemacht.

Die Anzeige- und Bedieneinheit besitzt an ihrer Vorderseite 7 mindestens eine Informations-Anzeigezone 8 und mindestens einen Bedienbereich 9. In der Informations-Anzeigezone 8 werden Informationen angezeigt, die für den Betrieb einer mit der Anzeige- und Bedieneinheit 2 funktionsmäßig gekoppelten Einrichtung beliebiger Art relevant sind. Eine solche Einrichtung ist in Figur 7 exemplarisch anhand einer Sensoreinrichtung 12 dargestellt, die in der Lage ist, gewisse Werte zu ermitteln, welche in der Informations-Anzeigezone 8 angezeigt werden. In dem Bedienbereich 9 befindet sich die Bedientastatur 6. Während bei den Ausführungsbeispielen die Informations-Anzeigezone 8 und der Bedienbereich 9 nebeneinander platziert sind, ist ohne weiteres auch eine gegenseitige Überlappung bzw. Durchdringung möglich.

Die Bedientastatur 6 dient zur manuellen Daten- und/oder Befehlseingabe bezüglich der erwähnten Sensoreinrichtung 12 oder einer beliebigen anderen Einrichtung. Den einzelnen Bedientasten 5 können Funktionssymbole 13 zugeordnet sein, die Aufschluss auf die bei Betätigung der jeweiligen Bedientaste 5 hervorgerufene Funktion geben können.

Von der Anzeige- und Bedieneinheit 2 geht zweckmäßigerweise eine biegeflexible Kabelverbindung 14 ab, über die die eingegebenen Bedienbefehle zur zu betätigenden Einrichtung geleitet werden und über die das Anzeigeelement 4 die anzuzeigenden Informationen erhält. Die Kabelverbindung 14 ist insbesondere ein Flachbandkabel, wobei es sich um einen sogenannten Flexleiter handeln kann, mit anderen Worten um eine flexible Leiterplatte. Bevorzugt ist eine gemeinsame Kabelverbindung 14 für die Bedientastatur 6 und das Anzeigeelement 4 vorhanden.

Die Kabelverbindung 14 ist bei den Ausführungsbeispielen fest an der Anzeige- und Bedieneinheit 2 angebracht. Alternativ wäre allerdings auch eine Steckverbindung oder eine andere lösbare Verbindung möglich. Von Vorteil ist es jedenfalls, wenn die Flachgestalt aufweisende Kabelverbindung 14 in einer mit der Hauptausdehnungsebene 3 zusammenfallenden oder dazu parallelen Ebene von der Anzeige- und Bedieneinheit 2 abgeht.

Die Anzeige- und Bedienvorrichtung 1 kann allein aus der Anzeige- und Bedieneinheit 2 bestehen, die im Zusammenhang mit ihrem bestimmungsgemäßen Einsatz über insbesondere eine Kabelverbindung 14 mit der unter ihrer Vermittlung zu betreibenden Einrichtung, beispielsweise eine Sensoreinrichtung 12, verbindbar ist. Es ist allerdings von Vorteil, wenn zumindest die Kabelverbindung 14 auch ein unmittelbarer Bestandteil der Anzeige- und Bedienvorrichtung 1 ist.

Die elektrische Verbindung mit der Sensoreinrichtung 12 oder einer sonstigen zu betätigenden und/oder zu überwachenden Einrichtung erfolgt zweckmäßigerweise unter Vermittlung einer in Figur 7 angedeuteten Steuerelektronik 15. Diese ist zweckmäßigerweise über die Kabelverbindung 14 an die Anzeige- und Bedieneinheit 2 angeschlossen. Die Steuerelektronik 15 wertet die über die Bedientastatur 6 eingegebenen Befehle aus und liefert die anzuzeigenden Informationen an das Anzeigeelement 4. Die mechanische Verbindung mit der Steuerelektronik 15 kann über Steckverbindungsmittel 16 vorgenommen sein, die sich teils an der Kabelverbindung 14 und teils an der Steuerelektronik 15 befinden.

Die Anzeige- und Bedieneinheit 2 wird für ihren bestimmungsgemäßen Gebrauch zweckmäßigerweise an einer dafür geeigneten Tragstruktur 17 befestigt. Die Tragstruktur 17 kann eine externe Komponente sein, beispielsweise eine am Einsatzort vorhandene Wand oder Strebe. Ein solcher Anwendungsfall ist in Figur 2 illustriert, indem dort die nicht unmittelbar zu Anzeige- und Bedienvorrichtung 1 gehörende Tragstruktur 17 lediglich strichpunktiert angedeutet ist.

Die Befestigung an der Tragstruktur 17 kann durch beliebige Befestigungsmaßnahmen vorgenommen werden. Beispielsweise könnte die Anzeige- und Bedieneinheit 2 über ein oder mehrere Befestigungslöcher für eine Schraubbefestigung verfügen. Auch eine Rastverbindung ließe sich ohne weiteres realisieren oder eine Einschubmontage in einen Schlitz oder eine vergleichbare Aufnahme der Tragstruktur 17. Als besonders vorteilhaft wird allerdings eine Haftbefestigung angesehen, zu welchem Zweck die Anzeige- und Bedieneinheit 2 an ihrer der Vorderseite 7 entgegengesetzten Rückseite mit entsprechenden Haftmitteln 18 versehen ist. Bevorzugt ist die Anzeige- und Bedieneinheit 2 hierzu rückseitig zum Teil und insbesondere zur Gänze mit einer Klebeschicht versehen, insbesondere einer Selbstklebeschicht, über die die Anzeige- und Bedieneinheit 2 leicht an einer Tragstruktur 17 festgeklebt werden kann. Sie ist lediglich mit geringem Kraftaufwand mit den als Klebeschicht ausgebildeten Haftmitteln 18 voraus an die Tragstruktur 17 anzudrücken.

Indem die Haftmittel 18 oder sonstige Befestigungsmittel als integraler Bestandteil der Anzeige- und Bedieneinheit 2 ausgeführt sind, kann vor Ort eine rasche und einfache Fixierung ohne nennenswerte Zusatzmaßnahmen erfolgen. Prinzipiell wäre es jedoch ohne weiteres auch möglich, die Haftmittel, beispielsweise durch Applizieren eines Klebstoffes, unmittelbar vor der Endmontage auf die Rückseite der Anzeige- und Bedieneinheit 2 und/oder die Tragstruktur 17 aufzubringen.

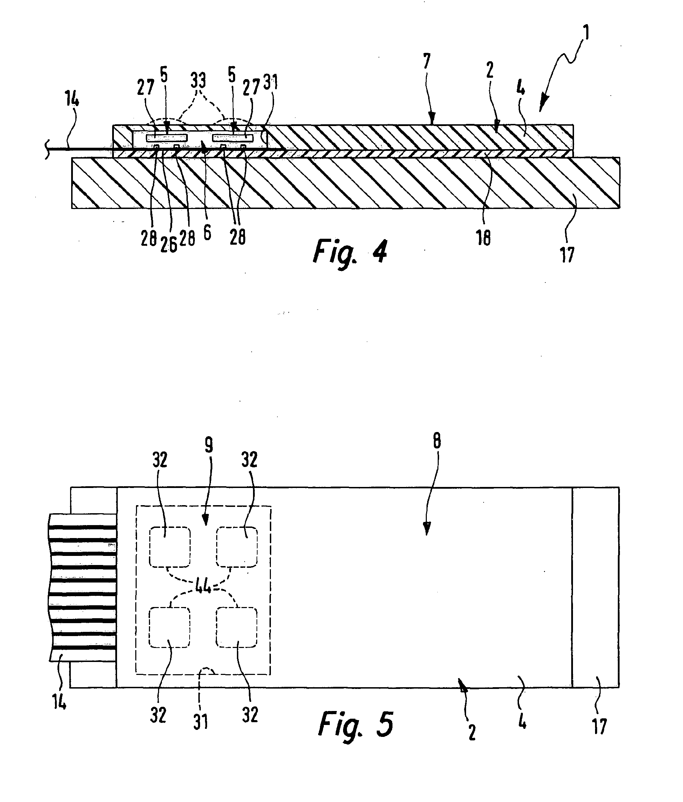

Die geschilderten Befestigungsmaßnahmen gelten auch für die in Figuren 4 bis 7 gezeigten Ausführungsformen, bei denen die Tragstruktur 17 ein Bestandteil der Anzeige- und Bedienvorrichtung 1 ist.

Bei dem Ausführungsbeispiel der Figuren 4 und 5 ist die Tragstruktur 17 ein einfaches Gehäuseteil, das im wesentlichen lediglich die Aufgabe besitzt, als Träger für die Anzeige- und Bedieneinheit 2 und als Verbindungsglied zu einer weiteren Struktur zu dienen. Sie kann außerdem auch die schon erwähnte Steuerelektronik 15 aufnehmen. Die Anzeige- und Bedieneinheit 2 ist über die Haftmittel 18 oder durch andere Befestigungsmaßnahmen an der Tragstruktur 17 befestigt, die ihrerseits am nicht näher dargestellten Gehäuse oder einer anderen Komponente eines Gerätes anbringbar ist, das unter Verwendung der Anzeige- und Bedienvorrichtung 1 betrieben werden soll.

Bei dem Ausführungsbeispiel der Figuren 6 und 7 ist die Tragstruktur 17 unmittelbarer Bestandteil der schon erwähnten Sensoreinrichtung 12. Auf diese Weise ergibt sich insgesamt eine Anzeige- und Bedienvorrichtung 1, die nicht nur eine Anzeige- und Bedieneinheit 2 und zweckmäßigerweise eine dieser zugeordnete Steuerelektronik 15 aufweist, sondern zusätzlich auch noch die funktionell zugeordnete Sensoreinrichtung 12 beinhaltet.

Bei dem Ausführungsbeispiel repräsentiert das Gehäuse 22 der Sensoreinrichtung 12 die Tragstruktur 17. Die Anzeige- und Bedieneinheit 2 ist über Haftmittel 18 derart an einer Außenfläche des Gehäuses 22 befestigt, dass ihre Vorderseite 7 für Bedien- und Ablesezwecke zugänglich ist. Die Sensoreinrichtung 12 dient zur Erfassung mindestens einer Zustandsgröße und beinhaltet mindestens eine an den Erfassungszweck angepasste Sensorik 23. Exemplarisch ist eine als Drucksensoreinrichtung und/oder als Durchflüsssensoreinrichtung konzipierte Sensoreinrichtung 12 illustriert, deren Gehäuse von mindestens einem Kanal 24 durchsetzt ist, der im Betrieb der Einrichtung von einem Fluid, beispielsweise von Druckluft, durchströmt wird. Die Sensorik 23 ist dem Kanal 24 in einer weise zugeordnet, dass sie von dem darin strömenden Fluid beeinflusst wird und entsprechende Messdaten aufnehmen kann, die an eine beim Ausführungsbeispiel als unmittelbarer Bestandteil der Sensoreinrichtung 12 ausgeführte Auswerteelektronik 25 übermittelt werden. Von dort gelangen die Daten in anwendungsspezifisch aufbereiteter Form zu der Steuerelektronik 15, die die Wiedergabe an dem Anzeigeelement 4 veranlasst.

Das Ausführungsbeispiel der Figuren 6 und 7 hat den zusätzlichen Vorteil, dass die Auswerteelektronik 25 der Sensoreinrichtung 12 und die Steuerelektronik 15 für die Anzeige- und Bedieneinheit 2 in einer gemeinschaftlichen Elektronik zusammengefasst sind. Anders ausgedrückt, kann die Auswerteelektronik 25 so ausgeführt sein, dass sie unmittelbar selbst auch als Steuerelektronik 15 für die Anzeige- und Bedieneinheit 2 fungiert, so dass hierfür auf eine gesonderte Steuerelektronik verzichtet werden kann.

Von Vorteil ist es auf jeden Fall, wenn die Steuerelektronik 15, sei es nun eine eigenständige oder eine mit der Auswerteelektronik 25 integrierte Elektronik, unabhängig von der Anzeige- und Bedieneinheit 2 an der Tragstruktur 17 fixiert ist. Hierzu kann sie insbesondere auf einer Leiterplatte aufgebaut sein, wie dies in Figur 7 angedeutet ist.

Im folgenden werden mehrere mögliche Varianten des konstruktiven Aufbaues der Anzeige- und Bedieneinheit 2 erläutert. Die dabei geschilderten Maßnahmen sind bei allen Ausführungsbeispielen möglich.

Den Ausführungsbeispielen der Figuren 1 bis 5 ist das Grundprinzip gemeinsam, dass die Bedientastatur 6 an ihrer Vorderseite von dem ununterbrochen ausgebildeten Anzeigeelement 4 überdeckt ist und, mit anderen Worten, auf der der Vorderseite 7 entgegengesetzten Seite hinter bzw. unter dem bevorzugt eine streifenartige Ausdehnung aufweisenden Anzeigeelement 4 liegt. Die Bedientasten 5 sind als mechanische Tasten ausgeführt, insbesondere mit jeweils einem Kontaktträger 26 und einem Verbindungsglied 27, die im unbetätigten Zustand rechtwinkelig zur Hauptausdehnungsebene 3 zueinander beabstandet sind und die in dieser Richtung relativ zueinander bewegt werden können, so dass sie sich berühren und durch das Verbindungsglied 27 eine elektrische Verbindung zwischen bis dahin voneinander getrennten Kontakten 28 des Kontaktträgers 26 hervorgerufen wird. Da der Aufbau derartiger Bedientastaturen und Bedientasten als solches bekannt ist, wird an dieser Stelle nicht näher darauf eingegangen.

Jedenfalls erfolgt bei den Ausführungsbeispielen der Figuren 1 bis 5 die Tastenbetätigung in mittelbarer Weise durch Beaufschlagung der die jeweilige Bedientaste 5 überdeckenden Zone des Anzeigeelementes 4, die im folgenden als Betätigungszone 32 bezeichnet sei. Die Betätigungszonen 32 sind in Figuren 1 und 5 durch eine gepunktete Umrandung angedeutet.

Die Bauformen der Figuren 2 und 3 unterscheiden sich lediglich in der Anordnung der Verbindungsglieder 27 und des Kontaktträgers 26. Im Falle der Figur 2 liegen die Verbindungsglieder 27 zwischen dem Anzeigeelement 4 und dem Kontaktträger 26, während beim Ausführungsbeispiel der Figur 3 der Kontaktträger 26 zwischen dem Anzeigeelement 4 und den Verbindungsgliedern 27 angeordnet ist. Bei einer manuellen Beaufschlagung der einzelnen Betätigungszonen 32 wird das flexible Anzeigeelement 4 lokal verformt und eine Betätigungskraft auf das dahinterliegende Verbindungsglied 27 bzw. den dahinterliegenden Kontaktträger 26 ausgeübt, so dass dieses bzw. diese sich zum Schließen der Verbindung zum ortsfesten Kontaktträger 26 bzw. Verbindungsglied 27 hin verlagert.

Der Kontaktträger 26 ist mit der Kabelverbindung 14 elektrisch kontaktiert und kann mit dieser sogar in Baueinheit ausgeführt sein.

An dieser Stelle sei erwähnt, dass anstelle einer flexiblen auch eine starre Kabelverbindung möglich wäre, wobei der Begriff "Kabelverbindung" in diesem Falle im Sinne starrer Leiterzüge zu verstehen ist.

Die vollflächige Überdeckung der Bedientastatur 6 durch das Anzeigeelement 4 hat Vorteile sowohl hinsichtlich der Abschirmung vor Verunreinigungen als auch hinsichtlich der anzuwendenden Fertigungstechnologie. Zu erwähnen sei auch noch, dass das Anzeigeelement 4 im Bereich der Betätigungszonen 32 jeweils lokal leicht erhaben ausgeführt sein kann, wie dies in Figur 4 durch gepunktete Erhebungen 33 angedeutet ist. Dadurch lassen sich die Betätigungszonen 32 mit dem Finger einer Hand leichter erfühlen.

Das derzeit als optimale Lösung angesehene Ausführungsbeispiel der Figuren 4 und 5 sieht eine rückseitige Ausnehmung 31 im Anzeigeelement 4 vor, in dem die Bedientastatur 6 zumindest teilweise und vorzugsweise zur Gänze aufgenommen ist. Im letzteren Falle wird erreicht, dass die Bedientastatur 6 nicht über die der Vorderseite 7 entgegengesetzte, bevorzugt in einer Ebene verlaufende Rückfläche 34 des Anzeigeelementes 4 vorsteht. Man kann somit gemäß Figur 4 an der Rückfläche 34 von einer Haftschicht gebildete Haftmittel 18 anbringen, die die Öffnung der Ausnehmung 31 überdecken und dadurch die Bedientastatur 6 in dieser Ausnehmung 31 fixieren.

Es ist im übrigen vorteilhaft, wenn die Bedientastatur 6 als Baueinheit ausgeführt ist, die mehrere und bevorzugt sämtliche Bedientasten 5 beinhaltet und als Baueinheit in der Ausnehmung 31 platziert werden kann.

Anstelle einer Haftschicht kann auch eine andere, lediglich als Verschlussschicht fungierende Schicht an der Rückfläche 34 angebracht werden, um die Ausnehmung 31 zu verschließen.

Bei dem Ausführungsbeispiel der Figuren 2 und 3 hat das Anzeigeelement 4 eine ebene unvertiefte Rückfläche 34. Hier sitzt die Bedientastatur 6 in einer größenmäßig angepassten Aussparung 35 einer an der Rückfläche 34 angebrachten, das Anzeigeelement 4 rückseitig abgesehen vom Bereich der Aussparung 35 vorzugsweise vollständig überdeckenden Ausgleichsschicht 36. "Ausgleichsschicht" deshalb, weil die Bauhöhe der Bedientastatur 6 ausgeglichen wird und mithin an der dem Anzeigeelement 4 entgegengesetzt orientierten Rückfläche 37 wiederum eine ebene Fläche definiert wird, an der eine Haftschicht oder Verschlussschicht vergleichbar der Figur 4 angebracht werden kann, um die Aussparung 35 dicht zu verschließen. Die Ausgleichsschicht 36 und die Bedientastatur 5 liegen hierbei zweckmäßigerweise in einer gemeinsamen Ebene.

Die Ausgleichsschicht 36 kann aus mehreren in der Ausdehnungsebene aneinandergesetzten Schichtkomponenten bestehen, um die Aussparung 35 zu definieren. Von Vorteil ist allerdings die Verwendung einer einstückigen Ausgleichsschicht 36, die eine fensterartige Durchbrechung besitzt, welche die Aussparung 35 bildet.

Bei dem Ausführungsbeispiel der Figuren 6 und 7 sind das Anzeigeelement 4 und die Bedientastatur 6 in einer gemeinsamen Ebene liegend in besagter Ebene nebeneinander angeordnet. Um den Zusammenhalt als Baueinheit zu gewährleisten, sind beide Komponenten von einer zumindest im Anzeigebereich des Anzeigeelementes 4 lichtdurchlässigen Abdeckfolie 38 abgedeckt. Letztere ist mit der Bedientastatur 6 und/oder dem Anzeigeelement 4 zweckmäßigerweise fest verklebt. Bevorzugt ist sie insgesamt lichtdurchlässig.

Das Anzeigeelement 4 kann bei diesem Ausführungsbeispiel eine Durchbrechung aufweisen, in der sich die Bedientastatur 6 befindet, so dass sie von Bestandteilen des Anzeigeelementes 4 umschlossen ist. Abgebildet ist eine hiervon abweichende Bauform, bei der die Bedientastatur 6 zwar ebenfalls gekapselt in einem Aufnahmeraum 42 unter der Abdeckfolie 38 angeordnet ist, wobei der Aufnahmeraum 42 allerdings randseitig nur teilweise vom Anzeigeelement 4 begrenzt ist und im übrigen von einer Ausgleichsschicht 43.

Die Betätigung der Bedientastatur 6 erfolgt bei dem Ausführungsbeispiel der Figuren 6 und 7 wie im Falle der Figuren 1 bis 5, mit dem einzigen Unterschied, dass sich die Betätigungszonen 32 an der die Bedientastatur 6 übergreifenden Abdeckfolie 38 befinden und diese zur Aktivierung der Bedientasten 5 zu beaufschlagen ist. Die Abedeckfolie 8 kann im Bereich der Betätigungszonen jeweils lokal erhaben ausgeführt sein, wie dies gepunktet bei 33' angedeutet ist.

Wenn sich das Anzeigeelement 4 über die Bedientastatur 6 hinweg erstreckt, besteht die vorteilhafte Möglichkeit, die Funktionssymbole für die einzelnen Bedientasten 5 durch Aktivierung des Anzeigeelementes 4 wiederzugeben. In diesem Fall besitzt das Anzeigeelement 4 zweckmäßigerweise den einzelnen Bedientasten 5 jeweils spezifisch funktionell zugeordnete Bedienungs-Anzeigezonen 44, wie sie in Figur 5 gepunktet angedeutet sind. Bevorzugt fallen diese Bedienungs-Anzeigezonen 44 mit den Betätigungszonen 32 zusammen, so dass sie unmittelbar über den zur Betätigung mit Druck zu beaufschlagenden Bedientasten 5 liegen. Mithin übernimmt das Anzeigeelement 4 eine Doppelfunktion, indem es nicht nur Betriebsinformationen der in Verbindung mit der Anzeige- und Bedienvorrichtung 1 betriebenen Einrichtung wiedergibt, sondern auch Bedienungsinformationen, wobei letztere nicht abseits der Bedientastatur 6 als Hilfsinformationen ausgegeben werden, sondern unmittelbar bei der jeweiligen Bedientaste 5 selbst. Mit anderen Worten dient die Wiedergabe des Anzeigeelementes 4 gleichzeitig als Tastaturbeschriftung.

In Figur 8 ist ein Bedienbereich 9 einer Anzeige- und Bedieneinheit 2 isoliert dargestellt, bei dem die einzelnen Funktionssymbole 13 in der geschilderten Weise durch das Anzeigeelement 4 aktiv wiedergegeben werden, es sich also nicht um fest aufgebrachte, passive Funktionssymbole handelt.

Unter dem Begriff "Funktionssymbole" seien nicht nur reine Symbole zu verstehen, sondern auch Beschriftungen oder jegliche sonstigen Informationen, die man einer oder mehreren Bedientasten 5 zuweisen möchte.

In Verbindung mit einer derartigen Ausführungsform ergeben sich weitere Vorteile, wenn die Steuerelektronik 15 in der Lage ist, die Informationen in den Bedienungs-Anzeigezonen 34 dynamisch, vom Betriebszustand abhängig, wiederzugeben. Auf diese Weise lassen sich in Abhängigkeit vom Betriebszustand in Verbindung mit einer sich ändernden Funktionalität der Bedientasten 5 unterschiedliche Funktionssymbole 13 wiedergeben. Dies ermöglicht eine Reduzierung der Anzahl der benötigten Bedientasten 5.

In der Anzeige- und Bedieneinheit können anstelle nur eines Anzeigeelementes 2 auch gleichzeitig mehrere Anzeigeelemente enthalten sein. Wegen der einfacheren Herstellung wird man allerdings in der Regel einen Aufbau mit nur einem einzigen Anzeigeelement vorziehen.

## Patentansprüche

1. Elektrisch betriebene Anzeige- und Bedienvorrichtung, mit mindestens einem als elektronisches Papier oder als Elektrolumineszenzfolie ausgebildeten, Flachgestalt aufweisenden Anzeigeelement (4) und mit einer mindestens eine Bedientaste für manuelle Betätigung (5) aufweisenden Bedientastatur (6), **dadurch gekennzeichnet, dass** das mindestens eine Anzeigeelement (4) und die Bedientastatur (6) zu einer platten- oder folienförmigen biegeflexiblen Anzeige- und Bedieneinheit (2) zusammengefasst sind, deren Vorderseite (7) eine kombinierte Anzeige- und Bedienseite bildet.

2. Vorrichtung nach Anspruch 1, **dadurch gekennzeichnet, dass** die Anzeige- und Bedieneinheit (2) rückseitig mit zur Befestigung dienenden, insbesondere schichtartig aufgebrachten, Haftmitteln (18) versehen ist.

3. Vorrichtung nach Anspruch 2, **dadurch gekennzeichnet, dass** die Haftmittel (18) von einer Klebeschicht, insbesondere einer Selbstklebeschicht, gebildet sind, die sich zweckmäßigerweise vollflächig über die gesamte Grundfläche der Anzeige- und Bedieneinheit (2) erstreckt.

4. Vorrichtung einem der Ansprüche 1 bis 3, **gekennzeichnet durch** eine über eine, zweckmäßigerweise biegeflexible, Kabelverbindung (14) insbesondere lösbar mit der Anzeige- und Bedieneinheit (2) verbundene Steuerelektronik (15) für die Anzeige- und Bedieneinheit (2).

5. Vorrichtung nach einem der Ansprüche 1 bis 4, **gekennzeichnet durch** eine Tragstruktur (17), an der die Anzeige- und Bedieneinheit (2) derart festlegbar oder befestigt ist, dass ihre Vorderseite (7) für Bedien- und Ablesezwecke zugänglich ist.

6. Vorrichtung nach Anspruch 5, **dadurch gekennzeichnet, dass** die Tragstruktur (17) zumindest partiell gehäuseartig ausgebildet ist.

7. Vorrichtung nach Anspruch 5 oder 6 in Verbindung mit Anspruch 4, **dadurch gekennzeichnet, dass** die Steuerelektronik (15) unabhängig von der Anzeige- und Bedieneinheit (2) an der Tragstruktur (17) fixierbar oder fixiert ist.

8. Vorrichtung nach einem der Ansprüche 5 bis 7, **dadurch gekennzeichnet, dass** die Tragstruktur (17) Bestandteil einer zur Erfassung mindestens einer Zustandsgröße dienenden Sensoreinrichtung (12) ist, die über eine mit der Anzeige- und Bedieneinheit (2) elektrisch in Wirkverbindung stehende Auswerteelektronik (25) verfügt und die zweckmäßigerweise mindestens einen im Betrieb von Fluid durchströmten Kanal (24) aufweist.

9. Vorrichtung nach Anspruch 8, **dadurch gekennzeichnet, dass** die Sensoreinrichtung (12) eine Drucksensoreinrichtung oder eine Durchflusssensoreinrichtung ist.

10. Vorrichtung nach einem der Ansprüche 1 bis 9, **dadurch gekennzeichnet, dass** die Bedientastatur (6) und das mindestens eine Anzeigeelement (4) in einer gemeinsamen Ebene liegend nebeneinander angeordnet und zweckmäßigerweise von einer zumindest in den Anzeigebereichen des Anzeigeelementes (4) lichtdurchlässigen Abdeckfolie (38) gemeinsam abgedeckt sind.

11. Vorrichtung nach einem der Ansprüche 1 bis 9, **dadurch gekennzeichnet, dass** die Bedientastatur (5) von dem Anzeigeelement (4) ununterbrochen überdeckt ist, derart, dass die Tastenbetätigung durch Beaufschlagung der die jeweilige Bedientaste (5) überdeckenden Zone (32) des Anzeigeelementes (4) stattfinden kann.

12. Vorrichtung nach Anspruch 11, **dadurch gekennzeichnet, dass** die Bedientastatur (5) in mindestens eine rückseitige Ausnehmung (31) des Anzeigeelementes (4) eintaucht und darin zweckmäßigerweise vollständig aufgenommen ist.

13. Vorrichtung nach einem der Ansprüche 1 bis 12, **dadurch gekennzeichnet, dass** die Bedientastatur (5) an der Rückseite des Anzeigeelementes (4) angeordnet ist, wobei sie mit einer zumindest der Höhe der Bedientastatur (5) entsprechenden Ausgleichsschicht (36) in einer gemeinsamen Ebene liegt.

14. Vorrichtung nach Anspruch 13, **dadurch gekennzeichnet, dass** die Bedientastatur (5) in mindestens einer fensterartigen Durchbrechung (35) der Ausgleichsschicht (36) angeordnet ist.

15. Vorrichtung nach einem der Ansprüche 1 bis 14, **dadurch gekennzeichnet, dass** das Anzeigeelement (4) mindestens eine mindestens einer Bedientaste (5) der Bedientastatur (6) spezifisch funktionell zugeordnete Bedienungs-Anzeigezone (44) aufweist.

16. Vorrichtung nach Anspruch 15 in Verbindung mit einem der Ansprüche 11 bis 14, **dadurch gekennzeichnet, dass** mindestens eine Bedienungs-Anzeigezone (44) rechtwinkelig zur Hauptausdehnungsebene (3) der Anzeige- und Bedieneinheit (2) unmittelbar über einer Bedientaste (5) angeordnet ist.

17. Vorrichtung nach Anspruch 15 oder 16, **gekennzeichnet durch** eine Steuerelektronik (15) zur Steuerung einer vom Betriebszustand abhängigen dynamischen Veränderung der in der mindestens einen Bedienungs-Anzeigezone (44) angezeigten Information.

18. Vorrichtung nach einem der Ansprüche 1 bis 17, **dadurch gekennzeichnet, dass** die Komponenten der Anzeige- und Bedieneinheit durch Klebeverbindungen aneinander fixiert sind.
